# EUROPÄISCHE PATENTSCHRIFT

(11) **EP 2 687 949 B1**
(45) Veröffentlichungstag und Bekanntmachung des Hinweises auf die Patenterteilung: **13.06.2018**
(21) Anmeldenummer: 13177284.0
(22) Anmeldetag: 19.07.2013
(51) Int. Cl.: G06F 3/01

(54) **Vorrichtung und Verfahren zur Erzeugung einer haptischen Rückmeldung an einem flächigen Substrat**
Device and method for generating haptic feedback on a planar substrate
Dispositif et procédé de génération d'une réponse haptique sur un substrat plat

(30) Priorität: 19.07.2012 AT 502872012
(43) Veröffentlichungstag der Anmeldung: 22.01.2014
(73) Patentinhaber: Linz Center of Mechatronics GmbH, 4040 Linz (AT)
(72) Erfinder: Gerstmayr, Johannes, 4202 Hellmonsödt (AT); Berger, Wolfgang, 3261 Wolfpassing (AT)
(74) Vertreter: Jell, Friedrich

(56) Entgegenhaltungen:
- EP-A1- 2 202 619
- EP-A1- 2 410 408
- WO-A1-2008/125130
- US-A1- 2009 085 879

## Beschreibung

Die Erfindung betrifft eine Vorrichtung und ein Verfahren zur Erzeugung einer haptischen Rückmeldung an einem flächigen Substrat, bei dem in Abhängigkeit einer Berührung des Substrats eine haptische Rückmeldung in Form einer wahrnehmbar veränderten Steifigkeit zumindest an der Berührungsstelle des Substrats erzeugt wird.

Um einem Benutzer eines berührungsempfindlichen Substrats eine von einer Betätigung einer mechanischen Taste bekannte haptische Rückmeldung auszugeben, ist es bekannt (WO2012/074634A1), die Steifigkeit des Substrats bei Berührung an der Berührungsstelle haptisch wahrnehmbar zu verändern. Zu diesem Zweck weist das Substrat ein "Smartgel" auf, dessen Konsistenz und damit dessen Nachgiebigkeit elektrisch aktiv angepasst werden können. Nachteilig bedarf es für solch eine Lösung eines vergleichsweise hohen verfahrenstechnischen und konstruktiven Aufwands, um trotz der vergleichsweise schwer beherrschbaren Parameter des "Smartgels" eine reproduzierbare haptische Rückmeldung sicherstellen zu können.

Zudem ist es aus der US2009/0250267A1 bekannt, die Steifigkeit eines hochflexiblen Substrats an seiner Berührungsstelle zu verändern, in dem ein an dieser Berührungsstelle vorgesehener Aktuator das Substrat mechanisch mit einer Kraft belastet. Um die unterschiedlichsten Berührungsstellen am Substrat bedienen zu können, sind eine Vielzahl an Aktuatoren über die Fläche des Substrats verteilt vorgesehen. Dies ist jedoch nachteilig konstruktiv aufwendig sowie bedarf einen vergleichsweise hohen Steuerungsaufwand. Zudem sind derartige Vorrichtungen durch die Vielzahl an Aktuatoren fehleranfällig und äußerst kostenintensiv in der Herstellung.

Außerdem ist aus dem Stand der Technik ein berührungsempfindliches Substrat bekannt (DE202009004561U1), bei dem eine haptische Rückmeldung in Form eines Druckpunkts erzeugt werden kann. Hierfür wird das Substrat auf einem Federelement beweglich gelagert, welches Federelement über elektromechanische Aktuatoren verformt werden kann. Auch für eine derartige Ausführungsform ist ein hoher Verfahrens- und Konstruktionsaufwand erforderlich.

Es ist daher die Aufgabe der Erfindung, ausgehend vom eingangs geschilderten Stand der Technik, ein reproduzierbares Verfahren zur Erzeugung einer haptischen Rückmeldung zu schaffen, durch das bei konstruktiver Einfachheit an einem berührungsempfindlichen Substrat eine Nachgiebigkeit in der Art einer mechanischen Taste erzeugt werden kann.

Die Erfindung löst die gestellte Aufgabe hinsichtlich des Verfahrens dadurch, dass das Substrat über seinen Randbereich zusätzlich zur Berührungsbelastung mechanisch, insbesondere elektromechanisch, auf Biegung belastet wird, um an der vom Randbereich beabstandeten Berührungsstelle die wahrnehmbare Steifigkeit des Substrats zu verändern, insbesondere zu reduzieren.

Wird das Substrat über seinen Randbereich zusätzlich zur Berührungsbelastung mechanisch belastet, kann an diesem eine zusätzliche Kraftkomponente für eine haptische Rückmeldung zur Verfügung gestellt werden. Wird diese Zusatzbelastung nun in Abhängigkeit der Berührung des Substrats verwendet, um an der vom Randbereich beabstandeten Berührungsstelle die wahrnehmbare Steifigkeit des Substrats zu verändern, kann sich äußerst reproduzierbar die Möglichkeit eröffnen, einem Benutzer im Rahmen seiner Wahrnehmungsfähigkeit eine haptische Rückmeldung in Form einer veränderten Nachgiebigkeit des Substrats an der Berührungsstelle zu vermitteln. Die haptischen Sinneseindrücke gehen nämlich kohärent mit der Impulswirkung der mechanischen Zusatzbelastung auf das Substrat einher, sodass dem Benutzer an der Berührungsstelle des Substrats sicher und zuverlässig ein diesem von tastenbezogenen Eingaben bekanntes und erwartetes haptisches Gefühl vermittelt werden kann. Durch das erfindungsgemäße Verfahren können daher auf einfache Weise die von einem "Smartgel" bekannten Probleme aufgrund der schwer beherrschbaren Änderung der Steifigkeit eines Substrats vermieden werden. Da zudem auf die aufwendigen und dadurch störanfälligen Konstruktionen zur Loslagerung des Substrats, wie diese im Stand der Technik durch Kopplung mit aktiven und passiven Federn erfolgen, verzichtet werden kann, ist auch eine erhöhte Verfahrenssicherheit zu erreichen. Konstruktive Einfachheit für eine standfeste Erzeugung einer sicher wahrnehmbaren haptischen Rückmeldung kann ermöglicht werden, wenn das Substrat zusätzlich elektromechanisch belastet wird, um damit die bei der Berührung wahrnehmbare Steifigkeit des Substrats zu reduzieren. Erfindungsgemäß kann sich daher an einem berührungsempfindlichen Substrat, wie beispielsweise einem Display, auf konstruktiv einfache Weise die Möglichkeit eröffnen, geläufige haptische Sinneseindrücke zur Informationsübertragung zu erzeugen.

Im Allgemeinen wird erwähnt, dass das Substrat aus jeglichem Material, insbesondere elastischen Material, bestehen kann. Das Substrat muss aber derart biegbar sein bzw. eine derartige Biegesteifigkeit aufweisen, dass eine mechanische Belastung in seinem Randbereich zu einer wahrnehmbaren veränderten Steifigkeit des Substrats an einer vom Randbereich beabstandeten Berührungsstelle am Substrat führt. Als Substrat kann beispielsweise eine Glasscheibe eines Displays zur Anzeige von Informationen, ein Berührungsbildschirm, eine Scheibe etc. dienen.

Wird das Substrat wenigstens bereichsweise verschiebefest gelagert, können sich erleichterte Verfahrensbedingungen zum Aufbringen der Berührungsbelastung auf das Substrat ergeben, um dieses damit zu biegen.

Ein von mechanischen Tasten geläufiger haptischer Sinneseindruck kann am Substrat erzeugt werden, indem die wahrnehmbare Steifigkeit des Substrats derart vermindert wird, dass sich eine haptische Rückmeldung in Form eines Druckpunkts ausbildet. Erfindungsgemäß kann sich dadurch das Substrat nun entgegen dem ersten Steifigkeitseindruck abrupt nachgiebiger anfühlen, was eine Erkennbarkeit einer haptischen Rückmeldung deutlich verbessern kann. Die Reproduzierbarkeit des Verfahrens kann dadurch erheblich gesteigert werden.

Eine vergleichsweise stark haptisch wahrnehmbare Veränderung der Steifigkeit des Substrats kann erzeugt werden, wenn das Substrat entgegen der Berührungsbelastung vorgespannt wird. Durch ein Entlasten der Vorspannung kann die Federwirkung des Substrats nämlich genutzt werden, die haptisch wahrnehmbare Steifigkeit des Substrats zusätzlich zu verändern. Gegebenenfalls kann eine zusätzliche Belastung des Substrats in Wirkungsrichtung der Berührungsbelastung das Empfinden der veränderten Steifigkeit des Substrats also erhöhen. Selbst bei unterschiedlicher haptischer Wahrnehmungsfähigkeit der Benutzer kann somit stets eine derart hohe haptische Rückmeldung erzeugt werden, dass diese sicher wahrgenommen wird. Insbesondere kann sich hierbei eine elektromechanische Vorspannung aufgrund ihrer einfachen Handhabbarkeit auszeichnen.

Wird die mechanische Berührungsbelastung im Randbereich des Substrats gemessen, können einfach handhabbare und damit durchführbare Messverfahren verwendet werden, die Berührung des Substrats zu erkennen und samt deren Kraftkomponente zu bestimmen.

Um den Effekt einer sich abrupt ändernden Steifigkeit zu verstärken, kann vorgesehen sein, dass erst nach einem Überschreiten eines vorgegebenen Vergleichswerts durch die gemessene mechanische Berührungsbelastung das Substrat zusätzlich zur Berührungsbelastung gebogen wird. Dadurch kann außerdem die Gefahr einer ungewollten Ausgabe einer haptischen Rückmeldung in Folge eines unbeabsichtigten Berührens des Substrats vermindert werden. Dies kann unter anderem die Zuverlässigkeit des Verfahrens erhöhen.

Verfahrenstechnisch einfach kann die Position samt der Größe der Berührungsbelastung an dieser Position bestimmt werden, wenn an wenigstens zwei Seiten des Randbereichs des Substrats die mechanische Berührungsbelastung gemessen wird und anhand dieser Messdaten die Position der mechanischen Berührungsbelastung am Substrat bestimmt wird.

Die Berührungsbelastung und die Zusatzbelastung können dazu verwendet werden, das Substrat zusätzlich zur Berührungsbelastung derart an wenigstens zwei Seiten des Randbereichs des Substrats zusätzlich unterschiedlich hoch auf Biegung belastet wird, dass sich in Abhängigkeit der Position der mechanischen Berührungsbelastung mindestens ein Bereich mit einer gegenüber anderen Biegebereichen des Substrats erhöhte Biegeauslenkung ergibt. So kann je nach Position der Berührungsbelastung eine auf einen bestimmten Bereich des Substrats beschränkte Formänderung erzeugt werden. Die Notwendigkeit, dass das gesamte Substrat in seine Ausgangslage zurückkehren muss bzw. zurückgeführt werden muss, kann also vermieden werden. Somit kann auch sichergestellt bleiben, dass andere Bereiche im Berührungsbereich des Substrats in ihrer Ausgangslage für eine Formänderung zur Verfügung stehen und deren Berührung innerhalb kurzer Zeit haptisch rückgemeldet werden kann.

Eine sich eventuell auf eine haptische Rückmeldung negativ auswirkende Eigenschwingung des Substrats kann aktiv reduziert werden, indem die mechanische Zusatzbelastung zusätzlich zur Veränderung der wahrnehmbaren Steifigkeit des Substrats mindestens eine, insbesondere die erste, Eigenschwingung des Substrats dämpft.

Insbesondere kann diese Krafteinleitung auf zwei Seiten des Substrats genutzt werden, in dem in Abhängigkeit der Position der Berührungsbelastung die Seiten des Randbereichs dermaßen unterschiedlich hoch mechanisch belastet werden, dass unabhängig von der Position der Berührungsbelastung eine im Wesentlichen gleiche Differenzschwelle in der haptischen Rückmeldung wahrnehmbar ist.

Im Allgemeinen wird erwähnt, dass eine vergleichsweise hohe Krafteinleitung in das Substrat ermöglicht werden kann, wenn zur Erzeugung der mechanischen Zusatzbelastung wenigstens zwei gegenüberliegende Seiten des Randbereichs des Substrats mechanisch belastet werden. Außerdem kann damit eine Vergleichmäßigung in einer Verformung des Substrats geschaffen werden, sodass eine Vorzugsrichtung in der wahrnehmbaren Steifigkeitsänderung des Substrats vermieden werden kann.

Die Erfindung hat sich außerdem die Aufgabe gestellt, eine Vorrichtung zur Erzeugung einer haptischen Rückmeldung am berührungsempfindlichen Substrat der eingangs geschilderten Art derart zu verbessern, dass mit konstruktiv einfachen Mitteln reproduzierbar eine wahrnehmbare veränderte Steifigkeit am Substrats erzeugt werden kann.

Die Erfindung löst die gestellte Aufgabe hinsichtlich der Vorrichtung dadurch, dass der insbesondere elektromechanische und im vom Berührungsbereich beabstandeten Randbereich des Substrats angeordnete Aktuator mit dem Substrat mechanisch verbunden ist und bei dessen Ansteuerung das Substrat derart mit einer Kraft belastet, dass sich über eine Biegung des Substrats dessen wahrnehmbare Steifigkeit verändert, insbesondere reduziert, um damit die haptische Rückmeldung an der Berührungsstelle zu erzeugen.

Ist der vom Berührungsbereich im beabstandeten Randbereich des Substrats angeordnete Aktuator mit dem Substrat mechanisch verbunden ist und belastet der Aktuator bei dessen Ansteuerung das Substrat derart mit einer Kraft, dass sich über eine Biegung des Substrats dessen wahrnehmbare Steifigkeit verändert, um damit die haptische Rückmeldung an der Berührungsstelle zu erzeugen, kann auf Aktuatoren im Berührungsbereich des Substrats verzichtet werden. Es kann nämlich über einen im Randbereich und damit außerhalb des Berührungsbereichs angeordneten Aktuator die Biegung des Substrats verwendet werden, reproduzierbar eine haptische Rückmeldung an der Berührungsstelle zu erzeugen, was nicht nur einfache Konstruktionsverhältnisse an der Vorrichtung schafft, sondern auch den Berührungsbereich des Substrats frei von Mitteln zur Erzeugung einer haptischen Rückmeldung hält. Diese Konstruktion kann noch weiter vereinfacht werden, indem ein elektromechanischer Aktuator verwendet wird. Bekannte haptische Wahrnehmungserfahrungen können genutzt werden, wenn sich durch die Biegung des Substrats dessen wahrnehmbare Steifigkeit reduziert. Eine besonders sicher wahrnehmbare haptische Rückmeldung kann dadurch erzeugt werden.

Konstruktiv einfach können Biegeverformungen am Substrat erzeugt werden, indem die Vorrichtung ein Gehäuse aufweist und zwischen dem Substrat und dem Gehäuse ein Festlager oder eine Einspannung vorgesehen ist. Durch dieses zwei oder dreiwertige Lagerung des Substrats können nämlich eventuelle Ausweichbewegungen des Substrats besonders vorteilhaft unterbunden werden, sodass standfest die wahrnehmbare Steifigkeit des Substrats verändert werden kann. Die Vorrichtung kann daher eine besonders verlässliche haptische Rückmeldung erzeugen.

Um den Grad der sich verringernden wahrnehmbaren Steifigkeit auf konstruktiv einfache Weise zu erhöhen, kann vorgesehen sein, dass das Substrat eine gegenüber seiner Ruhelage und entgegen der Berührungsbelastung vorgespannte Ausgangslage aufweist. Erfindungsgemäß kann nämlich mit einem Überwinden der Vorspannung in Zusammenhang mit einer aktiven Biegeverformung des Substrats durch die Aktuatoren eine erhöhte Auslenkung am Substrat erzeugt werden. Die Fühlbarkeit der haptischen Rückmeldung kann dadurch deutlich erhöht werden, was zu einer besonders verlässlichen Vorrichtung führen kann. Im Allgemeinen wird erwähnt, dass diese Vorspannung konstruktiv einfach von den Aktuatoren am Substrat erzeugt werden kann.

Verbindet eine mit dem Sensor verbundene Recheneinheit in Abhängigkeit eines Überschreitens eines Vergleichswerts eines Speichers duch Sensormessdaten mit dem Aktuator zu dessen Ansteuerung, kann mit Hilfe einer wahrnehmbaren veränderten Steifigkeit der haptische Eindruck eines Tastendrucks übermittelt werden.

Mindestens eine Eigenschwingung des Substrats kann auf konstruktiv einfache Weise gedämpft werden, wenn im elektrischen Pfad zur Ansteuerung des Aktuators ein Filter, insbesondere ein Tiefpassfilter vorgesehen ist. Insbesondere kann die haptische Rückmeldung gegenüber der Gefahr der Verfälschung geschützt werden, indem damit die erste Eigenschwingung des Substrats gedämpft wird.

In den Figuren ist beispielsweise der Erfindungsgegenstand anhand eines Ausführungsbeispiels näher dargestellt. Es zeigen
- Fig. 1: mehrere Ansichten auf das Substrat der Vorrichtung,
- Fig. 2: eine Darstellung des Kraftverlaufs in Abhängigkeit der Durchbiegung des nach Fig. 1 dargestellten Substrats,
- Fig. 3: eine Darstellung der wahrnehmbaren Steifigkeit in Abhängigkeit der Durchbiegung des nach Fig. 1 dargestellten Substrats und
- Fig. 4: eine schematische Darstellung zur Steuereinrichtung der Vorrichtung.

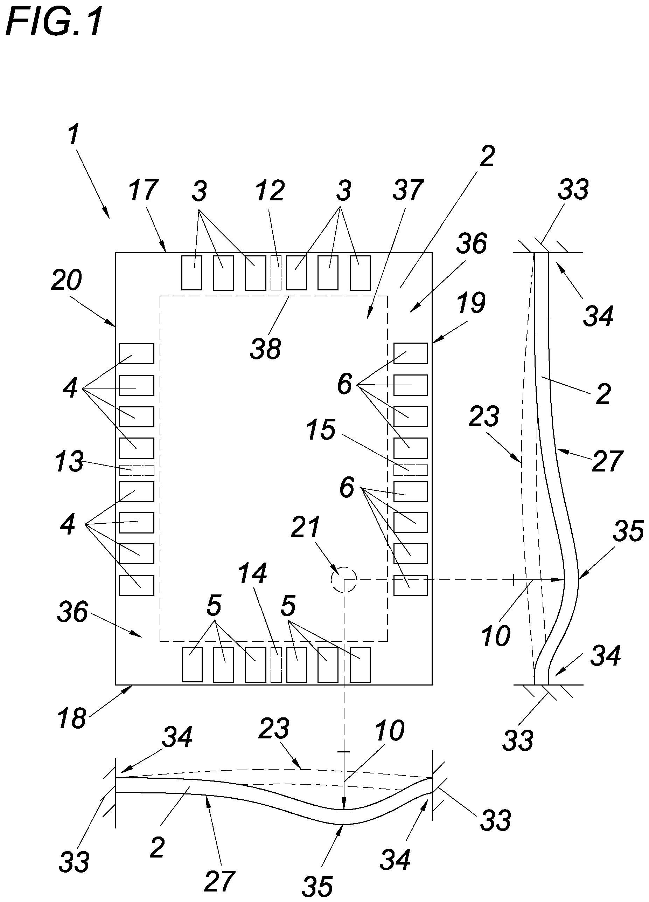

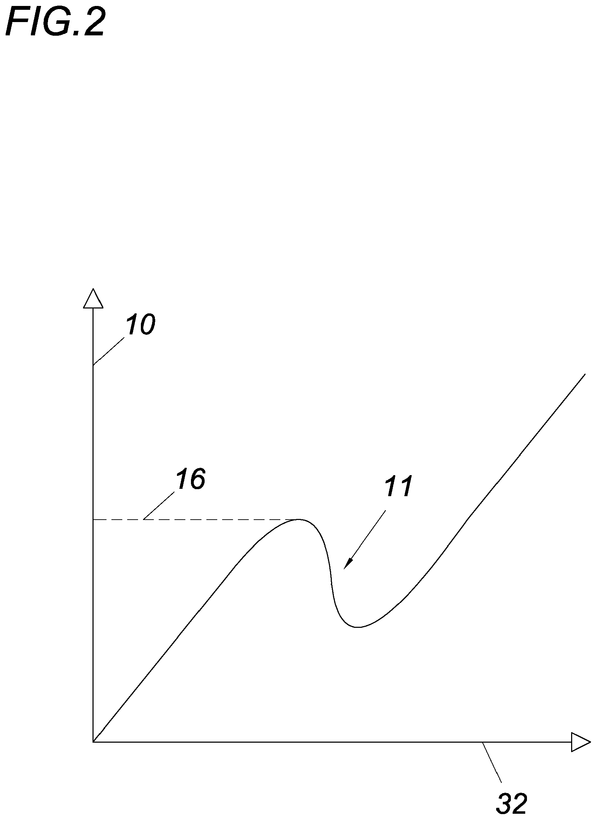

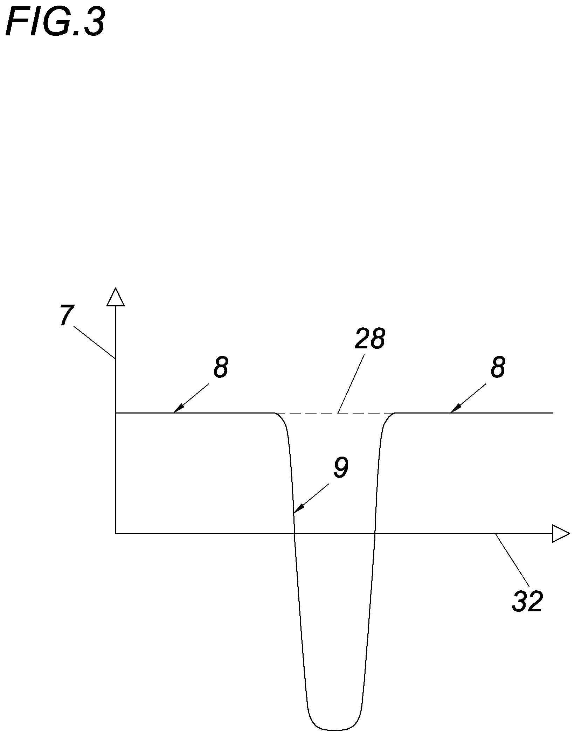

Nach Fig. 1 wird von der Vorrichtung 1 zur Erzeugung einer haptischen Rückmeldung das plattenförmige Substrat 2 näher dargestellt. Das Substrat 2 kann als Glasscheibe eines Displays zur Anzeige von Informationen ausgeführt sein. Diesem Substrat 2 sind Mittel, die unter anderem Sensoren 12, 13, 14 und 15 umfassen, zugeordnet, um damit eine Berührung des Substrats 2 durch einen nicht näher dargestellten Benutzer erkennen zu können. Um diesem Benutzer dazu nun auch eine haptische Rückmeldung geben zu können, sind am Substrat 2 in seinem Randbereich 36 mehrere elektromechanische Aktuatoren 3, 4, 5 und 6 befestigt. Beispielsweise können diese Aktuatoren 3, 4, 5 und 6 durch Piezoelemente ausgebildet werden. Die Aktuatoren 3, 4, 5 und 6 werden genutzt, das Substrat 2 zusätzlich zur Berührungsbelastung elektromechanisch zu belasten - und zwar, indem wenigstens einer dieser Aktuatoren 3, 4, 5 und/oder 6 das Substrat 2 zusätzlich zur Berührungsbelastung elektromechanisch auf Biegung belastet, um damit die bei der Berührung wahrnehmbare Steifigkeit 7 des Substrats 2 zu reduzieren, wie dies der Fig. 3 entnommen werden kann. In Fig.3 ist im Verlauf der Steifigkeit 7 über die Durchbiegung (Auslenkung) 32 an der Berührungsstelle 21 in der Berührungszone bzw. im Berührungsbereich 37 des Substrats 2 eine Abweichung zu erkennen, die sich in einer haptisch wahrnehmbaren Änderung einer, einem konstanten Verlauf 8 folgenden Steifigkeit 7 der Platte zu einer, einem variablen Verlauf 9 folgenden Steifigkeit 7 äußert. Dies ist für einen Benutzer haptisch deutlich erkennbar, denn die Substratsteifigkeit 28 - ausschließlich bedingt durch Parameter des Substrats 2 - ändert sich nicht. Um jedoch dessen Steifigkeit 7 wahrnehmbar zu ändern, wird das Substrat 2 mit den angesteuerten Aktuatoren 3, 4, 5 und/oder 6 mit einer zusätzlichen Kraft derart belastet, dass sich über eine Biegung des Substrats 2 dessen wahrnehmbare Steifigkeit 7 reduziert, um damit die haptische Rückmeldung zu erzeugen. Dies kann auch in der Fig. 2 erkannt werden. Ab einem vorbestimmbaren Vergleichswert 16 nimmt die Größe der Berührungskraft 10 ab, die benötigt wird, das Substrat 2 weiter zu biegen. Dies ist einem Benutzer in Form einer wahrnehmbar verminderten Steifigkeit 7 des Substrats 2 haptisch zugänglich.

Im Allgemeinen wird erwähnt, dass als Berührungsbereich 37 jener Bereich des Substrats verstanden werden kann, der frei von Aktuatoren 3, 4, 5 und/oder 6 ist. Randbereich 36 kann jedoch sowie in Fig. 1 zu erkennen durchaus über die Aktuatoren 3, 4, 5 und/oder 6 vorstehen, wie dies an der strichliert eingezeichnete Grenze 38 zwischen Randbereich 36 und Berührungsbereich 37 zu erkennen ist.

Der Sprung im Verlauf der Berührungskraft 10 bzw. der Steifigkeit 7 bildet einen Bereich 11 aus, der auch als Druckpunkt haptisch erkennbar ist. Einem Benutzer wird dadurch ein von einer mechanischen Taste bekannter haptischer Eindruck erzeugt, was die Erfindung gegenüber dem Stand der Technik besonders auszeichnen kann.

Zu diesem Zweck wird von der Einrichtung, die die haptische Rückmeldung am Substrat 2 erzeugt, die Berührungskraft 10 der Berührungsbelastung gemessen. Im Randbereich 36 des Substrats 2 sind hierfür Sensoren 12, 13, 14 und 15 befestigt. Diese Sensoren 12, 13, 14 und 15 können beispielsweise Dehnmesstreifen sein.

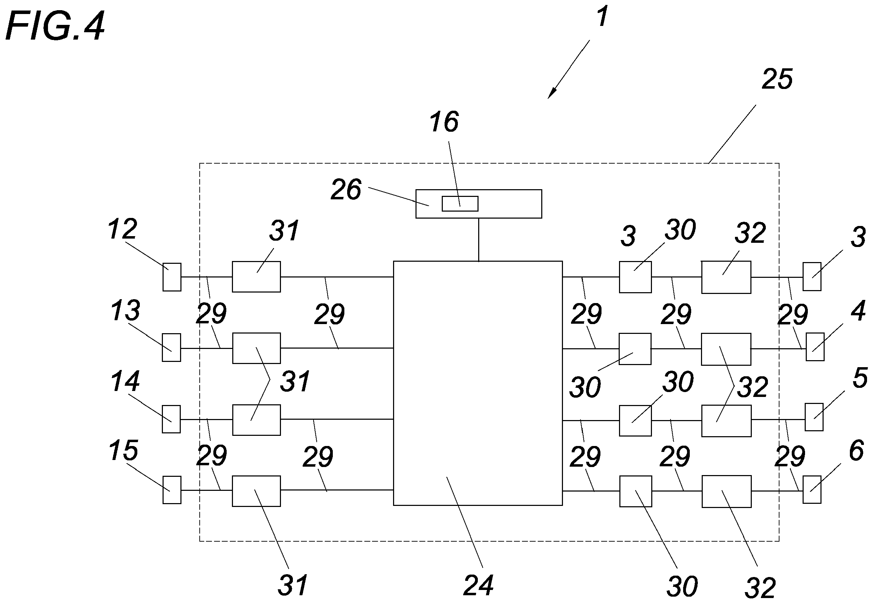

Wie in Fig. 4 zu erkennen, sind die Sensoren 12, 13, 14 und 15 mit einer Recheneinheit 24 einer Steuereinrichtung 25 der Einrichtung verbunden. Die Recheneinheit 24 vergleicht nun die Größe der Sensormessdaten der Sensoren 12, 13, 14 und 15 mit dem Vergleichswert 16, der in einem Speicher 26 der Steuereinrichtung 25 abgespeichert ist. Übersteigt die Größe der Sensormessdaten der Sensoren 12, 13, 14 und 15 den Vergleichswert 16 werden die Aktuatoren 3, 4, 5 und 6, von denen der Übersichtlichkeit halber in Fig. 4 nur je einer dargestellt worden ist, angesteuert, das Substrat 2 zusätzlich zur Berührungsbelastung durchzubiegen. Damit wird die sich ansonsten konstant verhaltende Steifigkeit des Substrats 2 wahrnehmbar reduziert. Eine haptische Rückmeldung ist so geschaffen.

Wie in Fig. 1 zu erkennen, ist es durch die erfindungsgemäße Konstruktion möglich, an gegenüberliegenden Seiten 17, 18 bzw. 19, 20 des Randbereichs 36 des Substrats 2 die Berührungsbelastung zu messen, die der Berührungsstelle 21 auf das Substrat 2 aufgetragen wird. Dadurch kann zusätzlich zur Größe der Berührungsbelastung auch die Berührungsstelle 21 am Substrat 2 bestimmt werden.

Diese Information wird dazu genutzt, das Substrat 2 zusätzlich zur Berührungsbelastung an wenigstens zwei Seiten 17, 18 bzw. 19, 20 des Randbereichs 36 des Substrats 2 zusätzlich auf Biegung derart unterschiedlich hoch zu belasten, dass sich in Abhängigkeit der Position der mechanischen Berührungsbelastung mindestens ein Bereich 35 mit einer gegenüber anderen Biegebereichen 27 des Substrats 2 erhöhte Biegeauslenkung ergibt. Diese besondere Biegung des Substrats 2 ist beispielsweise in den seitlich zur Draufsicht dargestellten Stirnansichten des Substrats 2 nach Fig. 1 zu erkennen.

Das Substrat 2 ist entgegen der Berührungsbelastung elektromechanisch mit Hilfe der Aktuatoren 3, 4, 5 und/oder 6 vorgespannt, wie dies in der strichliert eingezeichneten Ausgangslage 23 des Substrats 2 nach Fig. 1 zu erkennen ist. Das Substrat 2 weist daher eine gegenüber seiner planen Ruhelage vorgespannte Ausgangslage 23 auf. Damit wird eine zusätzliche Freiheit in der Bewegungsmöglichkeit des Substrats 2 genützt, um eine erhöhte haptische Rückmeldung zu erzeugen.

Um eine Anregung des Substrats 2 hinsichtlich seiner Eigenschwingung bzw. seiner Eigenschwingungen zu unterbinden, wird die mechanische Zusatzbelastung verwendet, zusätzlich zur Veränderung der wahrnehmbaren Steifigkeit 7 des Substrats 2 die erste Eigenschwingung des Substrats 2 zu dämpfen. Zu diesem Zweck ist im elektrischen Pfad 29 zur Ansteuerung der Aktuatoren 3, 4, 5 und/oder 6 ein Tiefpassfilter 30 zur Dämpfung mindestens einer Eigenschwingung des Substrats 2 vorgesehen, wie dies der Fig. 4 zu entnehmen ist. Außerdem weist die Steuereinrichtung 25 noch ADC (Analog-Digital Konverter) 31 sowie DAC (Digital-Analog Konverter) 32 in den elektrischen Pfaden 19 der Vorrichtung 1 auf.

Wie der Fig. 1 zu entnehmen, ist das Substrat 2 randseitig verschiebefest gelagert. Zu diesem Zweck ist zwischen dem Substrat 2 und dem Gehäuse 33 der Vorrichtung 1 eine Einspannung 34 vorgesehen. Vorstellbar, jedoch nicht dargestellt, ist ein Festlager zur verschiebefesten Einspannung 34 des Substrats 2. Vorteilhaft können durch diese Lagerung bekannte mathematische bzw. mechanische Theorien zur Biegung einer Platte herangezogen werden, die Aktuatoren 3, 4, 5 und/oder 6 diesbezüglich anzusteuern, um die erfindungsgemäße haptische Rückmeldung zu erzeugen.

## Patentansprüche

1. Vorrichtung mit einem flächigen Substrat (2), das einen Berührungsbereich (37) aufweist, und mit einer Einrichtung zur Erzeugung einer haptischen Rückmeldung am Substrat (2) in Abhängigkeit dessen Berührung, wobei die Einrichtung mindestens einen Sensor (12, 13, 14 und/oder 15) zur Detektion der Berührung am Substrat (2) und mindestens einen Aktuator (3, 4, 5 und/oder 6) zur Erzeugung einer haptischen Rückmeldung in Form einer wahrnehmbar veränderten Steifigkeit (7) an der Berührungsstelle (21) im Berührungsbereich (37) in Abhängigkeit seiner Ansteuerung aufweist, um damit am berührungsempfindlichen Substrat (2) eine Nachgiebigkeit in der Art einer mechanischen Taste zu erzeugen, **dadurch gekennzeichnet, dass** der im vom Berührungsbereich (37) beabstandeten Randbereich (36) des Substrats (2) angeordnete, insbesondere elektromechanische, Aktuator (3, 4, 5 und/oder 6) mit dem Substrat (2) mechanisch verbunden ist und bei dessen Ansteuerung das Substrat (2) derart mit einer Kraft belastet, dass sich über eine Biegung des Substrats (2) dessen wahrnehmbare Steifigkeit (7) verändert, insbesondere reduziert, um damit die haptische Rückmeldung an der Berührungsstelle (21) zu erzeugen.

2. Vorrichtung nach Anspruch 1, **dadurch gekennzeichnet, dass** die Vorrichtung ein Gehäuse (33) aufweist und dass zwischen dem Substrat (2) und dem Gehäuse (33) ein Festlager oder eine Einspannung (34) vorgesehen ist.

3. Vorrichtung nach Anspruch 1 oder 2, **dadurch gekennzeichnet, dass** das Substrat (2) eine gegenüber seiner Ruhelage und entgegen der Berührungsbelastung vorgespannte Ausgangslage (23) aufweist.

4. Vorrichtung nach Anspruch 1, 2 oder 3, **dadurch gekennzeichnet, dass** eine mit dem Sensor (12, 13, 14 und/oder 15) verbundene Recheneinheit (24) in Abhängigkeit eines Überschreitens eines Vergleichswerts (16) eines Speichers (26) durch Sensormessdaten mit dem Aktuator (3, 4, 5 und/oder 6) zu dessen Ansteuerung verbindet.

5. Vorrichtung nach einem der Ansprüche 1 bis 4, **dadurch gekennzeichnet, dass** im elektrischen Pfad (29) zur Ansteuerung des Aktuators (3, 4, 5 und/oder 6) ein Filter, insbesondere ein Tiefpassfilter (30) zur Dämpfung mindestens einer, insbesondere der ersten, Eigenschwingung des Substrats (2) vorgesehen ist.

6. Verfahren zur Erzeugung einer haptischen Rückmeldung an einem flächigen Substrat (2) einer Vorrichtung nach einem der Ansprüche 1 bis 5, bei dem in Abhängigkeit einer Berührung des Substrats (2) eine haptische Rückmeldung in Form einer wahrnehmbar veränderten Steifigkeit (7) zumindest an der Berührungsstelle (21) des Substrats (2) erzeugt wird, um damit am berührungsempfindlichen Substrat (2) eine Nachgiebigkeit in der Art einer mechanischen Taste zu erzeugen, **dadurch gekennzeichnet, dass** das Substrat (2) über seinen Randbereich (36) zusätzlich zur Berührungsbelastung mechanisch, insbesondere elektromechanisch, auf Biegung belastet wird, um an der vom Randbereich (36) beabstandeten Berührungsstelle (21) die wahrnehmbare Steifigkeit (7) des Substrats (2) zu verändern, insbesondere zu reduzieren.

7. Verfahren nach Anspruch 6, **dadurch gekennzeichnet, dass** das Substrat (2) wenigstens bereichsweise verschiebefest gelagert wird.

8. Verfahren nach Anspruch 6 oder 7, **dadurch gekennzeichnet, dass** die wahrnehmbare Steifigkeit (7) des Substrats (2) derart vermindert wird, dass sich eine haptische Rückmeldung in Form eines Druckpunkts ausbildet.

9. Verfahren nach Anspruch 6, 7 oder 8, **dadurch gekennzeichnet, dass** das Substrat (2) entgegen der Berührungsbelastung, insbesondere elektromechanisch, vorgespannt wird.

10. Verfahren nach einem der Ansprüche 6 bis 9, **dadurch gekennzeichnet, dass** die mechanische Berührungsbelastung im Randbereich (36) des Substrats (2) gemessen wird.

11. Verfahren nach Anspruch 10, **dadurch gekennzeichnet, dass** erst nach einem Überschreiten eines vorgegebenen Vergleichswerts (16) durch die gemessene mechanische Berührungsbelastung das Substrat (2) zusätzlich zur Berührungsbelastung gebogen wird.

12. Verfahren nach Anspruch 10 oder 11, **dadurch gekennzeichnet, dass** an wenigstens zwei Seiten (17, 18, 19, 20) des Randbereichs (36) des Substrats (2) die mechanische Berührungsbelastung gemessen wird und anhand dieser Messdaten die Position der mechanischen Berührungsbelastung am Substrat (2) bestimmt wird.

13. Verfahren nach Anspruch 12, **dadurch gekennzeichnet, dass** das Substrat (2) zusätzlich zur Berührungsbelastung derart an wenigstens zwei Seiten (17, 18, 19, 20) des Randbereichs (36) des Substrats (2) zusätzlich unterschiedlich hoch auf Biegung belastet wird, dass sich in Abhängigkeit der Position der mechanischen Berührungsbelastung mindestens ein Bereich (35) mit einer gegenüber anderen Biegebereichen (27) des Substrats (2) erhöhte Biegeauslenkung ergibt.

14. Verfahren nach einem der Ansprüche 6 bis 13, **dadurch gekennzeichnet, dass** die mechanische Zusatzbelastung zusätzlich zur Veränderung der wahrnehmbaren Steifigkeit (7) des Substrats (2) mindestens eine, insbesondere die erste, Eigenschwingung des Substrats (2) dämpft.

15. Verfahren nach einem der Ansprüche 6 bis 14, **dadurch gekennzeichnet, dass** in Abhängigkeit der Position der Berührungsbelastung die Seiten (17, 18, 19, 20) des Randbereichs (36) dermaßen unterschiedlich hoch mechanisch belastet werden, dass unabhängig von der Position der Berührungsbelastung eine im Wesentlichen gleiche Differenzschwelle in der haptischen Rückmeldung wahrnehmbar ist.

## Claims

1. Device with a flat substrate (2) having a contact area (37), and with a device for generating haptic feedback on the substrate (2) depending on the contact thereof, wherein the device has at least one sensor (12, 13, 14 and/or 15) for detecting contact on the substrate (2) and at least one actuator (3, 4, 5 and/or 6) for generating haptic feedback in the form of a perceptible change in rigidity (7) at the contact point (21) in the contact area (37) depending on its activation, in order to thereby generate flexibility on the touch-sensitive substrate (2) in the manner of a mechanical key, **characterized in that** the, more particularly electromechanica,l actuator (3, 4, 5 and/or 6), arranged in the edge region (36) of the substrate (2) at a distance from the contact area (37), is connected to the substrate (2) mechanically and, when activated, loads the substrate (2) with a force such that the perceptible rigidity thereof is altered, more particularly reduced, by bending of the substrate (2) in order to thereby generate the haptic feedback at the contact point (21).

2. Device according to claim 1, **characterised in that** the device has a housing (33) and **in that** a fixed bearing or mounting (34) is provided between the substrate (2) and the housing (33).

3. Device according to claim 1 or 2, **characterised in that** the substrate (2) has a preloaded initial position (23) relative to its resting position and counter to the contact load.

4. Device according to claims 1, 2 or 3, **characterised in that** a computing unit (24) connected to the sensor (12, 13, 14 and/or 15), depending on exceeding a comparison value (16) of a memory (26), connects to the actuator (3, 4, 5 and/or 6) through sensor measurement data for the activation thereof.

5. Device according to any one of claims 1 to 4, **characterised in that** a filter is provided in the electrical path (29) for activating the actuator (3, 4, 5 and / or 6), more particularly a low-pass filter (30) for damping at least one, more particularly the first, natural vibration of the substrate (2).

6. Method for generating haptic feedback to a flat substrate (2) of a device, according to one of the claims 1 to 5, whereby, depending on a contact with the substrate (2), haptic feedback in the form of a perceptible change in rigidity (7), at least at the contact point (21) of the substrate (2), is generated, in order to generate a flexibility on the touch-sensitive substrate in the manner of a mechanical key, **characterised in that** the substrate (2) is loaded mechanically, more particularly electromechanically, via its edge region (36), in addition to the contact load, by bending, in order to modify, more particularly to reduce the perceptible rigidity (7) of the substrate (2) at the contact point (21) at a distance from the edge region (36).

7. Method according to claim 6, **characterised in that** the substrate (2) is mounted such that it is resistant to displacement at least in certain areas.

8. Method according to claim 6 or 7, **characterised in that** the perceptible rigidity (7) of the substrate (2) is reduced such that a haptic feedback is generated in the form of a pressure point.

9. Method according to claims 6, 7 or 8, **characterised in that** the substrate (2) is preloaded, more particularly electromechanically, counter to the contact load.

10. Method according to any one of claims 6 to 9, **characterised in that** the mechanical contact load is measured in the edge region (36) of the substrate (2).

11. Method according to claim 10, **characterised in that** the substrate (2) is only bent additionally towards the contact load, after a predetermined comparison value (16) is exceeded by the measured mechanical contact load.

12. Method according to claim 10 or 11, **characterised in that**, on at least two sides (17, 18, 19, 20) of the edge region (36) of the substrate (2), the mechanical contact load is measured and, based on this measurement data, the position of the mechanical contact load on the substrate (2) is determined.

13. Method according to claim 12, **characterised in that** the substrate (2), additionally to the contact load, on at least two sides (17, 18, 19, 20) of the edge region (36) of the substrate (2), additionally loaded by different amounts by bending, is loaded in such a way that, in response to the position of the mechanical contact load, there is at least one region (35) with an elevated bending deflection compared to other bending regions (27) of the substrate (2).

14. Method according to any one of claims 6 to 13, **characterised in that** the mechanical additional load, additionally to the change in the perceptible rigidity (7) of the substrate (2), dampens at least one, more particularly the first, natural vibration of the substrate (2).

15. Method according to any one of claims 6 to 14, **characterised in that**, depending on the position of the contact load, the sides (17, 18, 19, 20) of the edge region (36) are mechanically loaded by such different amounts that, regardless of the position of the contact load, an essentially equal difference threshold is perceptible in the haptic feedback.

## Revendications

1. Dispositif doté d'un substrat (2) plat qui présente une zone de contact (37) et d'un équipement pour créer un retour d'informations haptique sur le substrat (2) en fonction de son contact, l'équipement présentant au moins un capteur (12, 13, 14 et/ou 15) destiné à détecter le contact sur le substrat (2) et au moins un actionneur (3, 4, 5 et/ou 6) destiné à créer un retour d'informations haptique sous la forme d'une rigidité (7) perceptiblement modifiée sur le point de contact (21) dans la zone de contact (37) en fonction de sa commande, pour ainsi créer sur le substrat (2) tactile une complaisance du type d'une touche mécanique, **caractérisé en ce que** l'actionneur (3, 4, 5 et/ou 6) notamment électromécanique, agencé dans la périphérie (36) du substrat (2) espacée de la zone de contact (37), est connecté mécaniquement au substrat (2) et que ledit actionneur (3, 4, 5 et/ou 6), lorsqu'il est actionné, sollicite le substrat (2) d'une charge telle que, sur une flexion du substrat (2) la rigidité (7) perceptible de celui-ci se modifie et diminue notamment, pour créer ainsi le retour d'informations haptique sur le point de contact (21).

2. Dispositif selon la revendication 1, **caractérisé en ce que** le dispositif présente un boîtier (33) et qu'est prévu, entre le substrat (2) et le boîtier (33), un support fixe ou un encastrement (34).

3. Dispositif selon la revendication 1 ou 2, **caractérisé en ce que** le substrat (2) présente une situation de départ précontrainte (23) par rapport à sa position de repos et à l'inverse de la contrainte de contact.

4. Dispositif selon la revendication 1, 2 ou 3, **caractérisé en ce qu'**une unité de calcul (24) connectée au capteur (12, 13, 14 et/ou 15) en fonction d'un dépassement d'une valeur de comparaison (16) d'un enregistreur (26) connecte à l'actionneur (3, 4, 5 et/ou 6), par le biais de données de mesure du capteur, pour le commander.

5. Dispositif selon l'une quelconque des revendications 1 à 4, **caractérisé en ce que** sur la trajectoire électrique (29) destinée à la commande de l'actionneur (3, 4, 5 et/ou 6), un filtre, notamment un filtre passe-bas (30) est prévu pour amortir au moins une, notamment la première, oscillation propre du substrat (2).

6. Procédé de génération d'un retour d'informations haptique sur un substrat plat (2) d'un dispositif selon l'une quelconque des revendications 1 à 5, dans lequel en fonction d'un contact du substrat (2) un retour d'informations haptique sous la forme d'une rigidité (7) perceptiblement modifiée est créé au moins au point de contact (21) du substrat (2) pour créer ainsi sur le substrat (2) tactile une complaisance du style d'une touche mécanique, **caractérisé en ce que** le substrat (2) est sollicité mécaniquement, notamment de manière électromécanique, en flexion en sa périphérie (36) en plus de la sollicitation de contact pour modifier la rigidité (7) perceptible du substrat (2) au point de contact (21) espacé de la périphérie (36), et notamment pour la réduire.

7. Procédé selon la revendication 6, **caractérisé en ce que** le substrat (2) est disposé non déplaçable au moins sur certaines zones.

8. Procédé selon la revendication 6 ou 7, **caractérisé en ce que** la rigidité perceptible (7) du substrat (2) est réduite de telle sorte qu'un retour d'informations haptique est conçu sous forme d'un point de pression.

9. Procédé selon la revendication 6, 7 ou 8, **caractérisé en ce que** le substrat (2) est précontraint, notamment de manière électromécanique, à l'inverse de la sollicitation de contact.

10. Procédé selon l'une quelconque des revendications 6 à 9, **caractérisé en ce que** la sollicitation mécanique de contact est mesurée dans la périphérie (36) du substrat (2).

11. Procédé selon la revendication 10, **caractérisé en ce que** le substrat (2) n'est fléchi en plus de la sollicitation de contrainte qu'après que la sollicitation mécanique de contact mesurée dépasse une valeur de comparaison prédéterminée (16).

12. Procédé selon la revendication 10 ou 11, **caractérisé en ce que** la sollicitation de contact mécanique est mesurée sur au moins deux côtés (17, 18, 19, 20) de la périphérie (36) du substrat (2) et que, à l'aide de ces valeurs de mesure, la position de la sollicitation mécanique de contact est déterminée sur le substrat (2).

13. Procédé selon la revendication 12, **caractérisé en ce que** le substrat (2) est sollicité en flexion en plus à des niveaux différents, outre la sollicitation de contact, en au moins deux côtés (17, 18, 19, 20) de la périphérie (36) du substrat (2), de telle sorte qu'en fonction de la position de la sollicitation mécanique de contact il ressort au moins une zone (35) présentant une déformation de flexion supérieure par rapport à d'autres zones de flexion (27) du substrat (2).

14. Procédé selon l'une quelconque des revendications 6 à 13, **caractérisé en ce que** la contrainte mécanique supplémentaire amortit, outre la modification de la rigidité perceptible (7) du substrat (2), au moins une, notamment la première, oscillation propre du substrat (2).

15. Procédé selon l'une quelconque des revendications 6 à 14, **caractérisé en ce que**, en fonction de la position de la contrainte de contact, les côtés (17, 18, 19, 20) de la périphérie (36) sont contraints mécaniquement à des niveaux différents de telle sorte que, indépendamment de la position de la sollicitation de contact, un seuil différentiel sensiblement égal est perceptible dans le retour d'informations haptique.
